# EUROPEAN PATENT APPLICATION

(11) **EP 4 283 818 A1**
(43) Date of publication of application: **29.11.2023**
(21) Application number: 21927327.3
(22) Date of filing: 27.02.2021
(51) Int. Cl.: H02J 7/00, H02K 21/00

(54) **ELECTRIC MOTOR, CHARGING APPARATUS, POWER ASSEMBLY AND VEHICLE**

(71) Applicant: Huawei Digital Power Technologies Co., Ltd., Shenzhen, Guangdong 518043 (CN)
(72) Inventor: FENG, Ningbo, Shenzhen, Guangdong 518129 (CN); WANG, Shaofei, Shenzhen, Guangdong 518129 (CN); WEI, Jingzhou, Shenzhen, Guangdong 518129 (CN); ZHANG, Xueliang, Shenzhen, Guangdong 518129 (CN)
(74) Representative: Epping - Hermann - Fischer
(86) International application number: PCT/CN2021/078337
(87) International publication number: WO 2022/178892

(57) **Abstract**

A motor, a charging apparatus, a powertrain, and a vehicle are provided, to charge and discharge a power battery by using one system. Therefore, device utilization is improved, and vehicle space is saved. The charging apparatus includes a motor and a motor control unit. The motor includes a rotor, a stator, a primary coil, and a secondary coil. The stator includes a stator core. The primary coil is wound around a yoke part of the stator core, and the primary coil is coupled to an external power supply. The secondary coil is wound around the yoke part of the stator core, and the secondary coil and the primary coil are wound around different groove structures inside the stator core. The primary coil and the secondary coil implement coupling voltage transformation through the stator core, to step up or step down an output voltage of the external power supply. The motor control unit is coupled to the secondary coil and a power battery, and is configured to perform alternating current-direct current conversion on an output current of the secondary coil to obtain a direct current, where the direct current is used to charge the power battery.

## Description

### TECHNICAL FIELD

This application relates to the field of new energy vehicle (new energy vehicle) technologies, and in particular, to a motor, a charging apparatus, a powertrain, and a vehicle.

### BACKGROUND

With development of technologies in the field of new energy, application of new energy vehicles, for example, electric vehicles/electric vehicles (electric vehicles)/hybrid electric vehicles, is increasingly popularized.

On-board charging can meet requirements of the electric vehicles for charging power batteries. In a conventional technology, when a vehicle stops, an on-board charger (on board charger, OBC) is usually used to convert an alternating current output by an external power supply into a direct current, to charge a power battery; and when the vehicle moves, electric energy output by the power battery is converted into mechanical energy by using an independent electric drive system, to drive the vehicle.

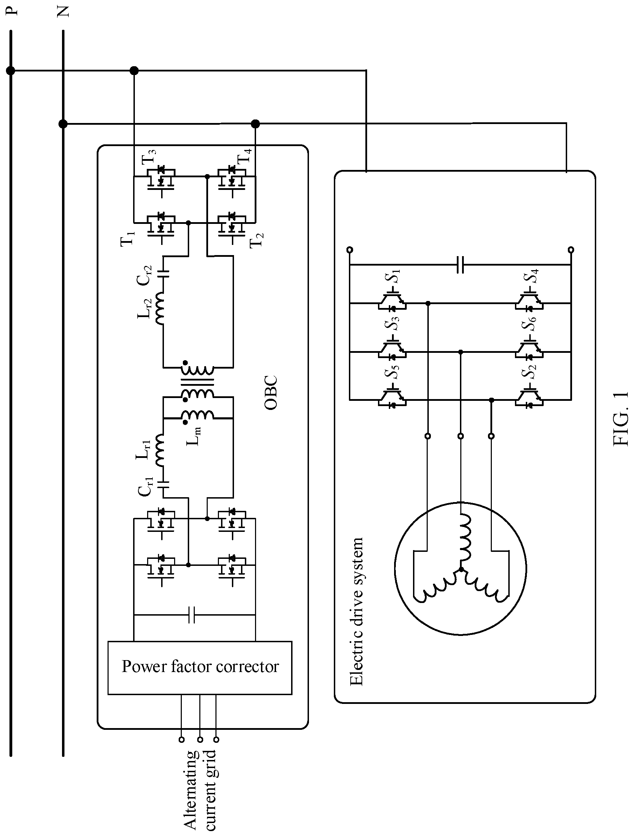

An architecture of charging and electric driving on a current electric vehicle may be shown in FIG. 1. The architecture shown in FIG. 1 includes two independent systems: an OBC and an electric drive system, and P and N respectively represent a positive electrode and a negative electrode of a power battery. When the OBC is used to charge the power battery, the electric drive system does not operate. When the vehicle moves, the electric drive system operates, and the OBC does not operate.

How to optimize vehicle space is one of key points in electric vehicle design. In the architecture shown in FIG. 1, the OBC and the electric drive system operate in a time-sharing manner, and there are problems such as a complex system and low device utilization, resulting in waste of the vehicle space.

### SUMMARY

Embodiments of this application provide a motor, a charging apparatus, a powertrain, and a vehicle, to implement charging and discharging of a power battery by using one system. Therefore, device utilization is improved, and vehicle space is saved.

According to a first aspect, an embodiment of this application provides a motor. The motor includes a rotor and a stator, and the stator includes a stator core. In addition, the motor also includes a primary coil and a secondary coil. The primary coil is wound around a yoke part of the stator core, and the primary coil is coupled to an external power supply. The secondary coil is wound around the yoke part of the stator core, the secondary coil and the primary coil are wound around different groove structures inside the stator core, and the secondary coil is coupled to a power battery via a motor control unit.

According to the motor provided in the first aspect, the primary coil and the secondary coil are wound around the yoke part of the stator core, to form a transformer, to step up/step down a voltage output by the external power supply, and then the alternating current output by the transformer is converted into a direct current through the MCU, to charge the power battery. A transformer structure is integrated in the motor. This shows an advantage of integration. In addition, the transformer structure may share a cooling and heat dissipation system with the motor. This further saves vehicle space. Therefore, compared with a solution in which a power battery is charged by using an independent transformer, the solution in which the transformer is integrated in the motor and that is provided in the first aspect may improve current density, reduce a transformer volume, and save vehicle space.

In addition, when the motor drives a vehicle, a stator magnetic field and a rotor magnetic field generate an interaction force through control of the MCU coupled with the motor, to drive the rotor to rotate. Therefore, motor torque is output to drive the vehicle.

Specifically, the primary coil and the secondary coil may implement coupling voltage transformation through the stator core, to step up or step down an output voltage of the external power supply.

In a possible design, a plurality of groove structures are provided on the outside of the stator core, and the plurality of groove structures on the outside of the stator core extend along an axial direction of the rotor and are used to wind the primary coil and the secondary coil; and the plurality of groove structures on the outside of the stator core one-to-one correspond to groove structures on the inside of the stator core.

According to the foregoing solution, a position of a transformer coil (including the primary coil and the secondary coil) may be fastened by using an inner groove and an outer groove.

In a possible design, the motor control unit is configured to perform alternating current-direct current conversion on an output current of the primary coil to obtain a direct current, and the direct current is used to charge the power battery.

In a possible design, the primary coil is wound through odd-numbered grooves inside the stator core, and the secondary coil is wound through even-numbered grooves inside the stator core. Alternatively, the primary coil is wound through even-numbered grooves inside the stator core, and the secondary coil is wound through odd-numbered grooves inside the stator core.

According to the foregoing solution, the primary coil and the secondary coil are evenly distributed on a 360° circumference of the stator core, and the primary coil and the secondary coil are coupled through the yoke part of the stator core. Therefore, coupling effect is strong. When the motor drives a vehicle to run, a magnetic field of the yoke part of the stator core and a magnetic field generated by a transformer winding may counteract each other. This prevents the transformer winding from inducing a voltage when the motor is running.

In another possible design, the primary coil is wound on a first part of the groove structure inside the stator core, the secondary coil is wound on a second part of the groove structure inside the stator core, and the primary coil and the secondary coil do not overlap in space.

According to the foregoing solution, the primary coil and the secondary coil are also coupled through the yoke part of the stator core. In addition, the primary coil and the secondary coil do not overlap in space. This reduces winding difficulty of the transformer winding.

Moreover, the stator in the motor may also include an armature winding wound around a tooth part of the stator core.

According to the foregoing solution, an alternating current is introduced into the armature winding to generate a stator magnetic field, and an interaction force is generated between the stator magnetic field and the rotor magnetic field, to drive the rotor to rotate and implement output of motor torque.

In a possible design, the rotor includes a rotor core and a permanent magnet.

According to the foregoing solution, a rotor magnetic field generated by the permanent magnet and the stator magnetic field generate an interaction force, to drive the rotor to rotate and implement output of motor torque.

According to a second aspect, an embodiment of this application provides a charging apparatus. The charging apparatus includes a motor and a motor control unit.

Specifically, the motor includes a rotor, a stator, a primary coil, and a secondary coil. The stator includes a stator core. The primary coil is wound around a yoke part of the stator core, and the primary coil is coupled to an external power supply. The secondary coil is wound around the yoke part of the stator core, and the secondary coil and the primary coil are wound around different groove structures inside the stator core. The primary coil and the secondary coil implement coupling voltage transformation through the stator core, to step up or step down an output voltage of the external power supply. The motor control unit is coupled to the secondary coil and a power battery, and is configured to perform alternating current-direct current conversion on an output current of the secondary coil to obtain a direct current, where the direct current is used to charge the power battery.

The motor may be one of a permanent magnet motor, an electric excitation motor, an asynchronous motor, and a hybrid excitation motor.

According to the foregoing solution, the primary coil and the secondary coil are wound around the yoke part of the stator core, so that the primary coil and the secondary coil can implement coupling voltage transformation through the stator core, to step up or step down an output voltage of the external power supply. Alternating current-direct current conversion is performed on an alternating current output by the secondary coil through the motor control unit, and an obtained direct current is used to charge the power battery.

In addition, when the motor drives a vehicle, a stator magnetic field and a rotor magnetic field generate an interaction force through control of the motor control unit to drive the rotor to rotate.

Therefore, mechanical energy is output to drive the vehicle.

In a possible design, a plurality of groove structures are provided on the outside of the stator core, and the plurality of groove structures on the outside of the stator core extend along an axial direction of the rotor and are used to wind the primary coil and the secondary coil; and the plurality of groove structures on the outside of the stator core one-to-one correspond to groove structures on the inside of the stator core.

According to the foregoing solution, a position of a transformer coil (including the primary coil and the secondary coil) may be fastened by using an inner groove and an outer groove.

In a possible design, the primary coil is wound through odd-numbered grooves inside the stator core, and the secondary coil is wound through even-numbered grooves inside the stator core. Alternatively, the primary coil is wound through even-numbered grooves inside the stator core, and the secondary coil is wound through odd-numbered grooves inside the stator core.

According to the foregoing solution, the primary coil and the secondary coil are evenly distributed on a 360° circumference of the stator core, and the primary coil and the secondary coil are coupled through the yoke part of the stator core. Therefore, coupling effect is strong. When the motor drives a vehicle to run, a magnetic field of the yoke part of the stator core and a magnetic field generated by a transformer winding may counteract each other. This prevents the transformer winding from inducing a voltage when the motor is running.

In another possible design, the primary coil is wound on a first part of the groove structure inside the stator core, the secondary coil is wound on a second part of the groove structure inside the stator core, and the primary coil and the secondary coil do not overlap in space.

According to the foregoing solution, the primary coil and the secondary coil are also coupled through the yoke part of the stator core. In addition, the primary coil and the secondary coil do not overlap in space. This reduces winding difficulty of the transformer winding.

Moreover, the stator in the motor may also include an armature winding wound around a tooth part of the stator core.

According to the foregoing solution, an alternating current is introduced into the armature winding to generate a stator magnetic field, and an interaction force is generated between the stator magnetic field and the rotor magnetic field, to drive the rotor to rotate and implement output of motor torque.

In a possible design, the rotor includes a rotor core and a permanent magnet.

According to the foregoing solution, a rotor magnetic field generated by the permanent magnet and the stator magnetic field generate an interaction force, to drive the rotor to rotate and implement output of motor torque.

In a possible design, the motor control unit may be a six-phase motor control unit, and the six-phase motor control unit includes a three-phase upper bridge arm and a three-phase lower bridge arm.

Further, one end of the primary coil is coupled to a connection point of two switching transistors connected in series in a first phase bridge arm of the three-phase upper bridge arm, and the other end of the secondary coil is coupled to a connection point of two switching transistors connected in series in a second phase bridge arm of the three-phase upper bridge arm.

According to the foregoing solution, two bridge arms of the six-phase motor control unit are reused, to provide a loop connected to the power battery for the secondary coil. Therefore, rectification after voltage step-up/step-down can be implemented, and a direct current obtained after rectification may be used to charge the power battery.

In a possible design, the motor control unit may be a three-phase motor control unit, and the three-phase motor control unit includes a three-phase bridge arm and a low-power bridge arm.

Further, one end of the primary coil is coupled to a connection point of two switching transistors connected in series in a first phase bridge arm of the three-phase bridge arm, and the other end of the secondary coil is coupled to a connection point of two switching devices connected in series in the low-power bridge arm.

According to the foregoing solution, one bridge arm of the three-phase motor control unit and the newly added low-power bridge arm are reused, to provide a loop connected to the power battery for the secondary coil. Therefore, rectification after voltage step-up/step-down can be implemented, and a direct current obtained after rectification may be used to charge the power battery.

Specifically, the low-power bridge arm may include a first switching transistor and a second switching transistor that are connected in series; the low-power bridge arm may include a first diode and a second diode that are connected in series; or the low-power bridge arm may include a first capacitor and a second capacitor that are connected in series.

According to a third aspect, an embodiment of this application provides a powertrain, and the powertrain includes a reducer and the charging apparatus provided in any one of the second aspect and the possible designs of the second aspect.

According to a fourth aspect, an embodiment of this application further provides a vehicle, including a power battery and the powertrain provided in the third aspect.

In addition, it should be understood that for technical effects brought by any one of the third aspect to the fourth aspect and the possible designs of the third aspect, refer to technical effects brought by different designs in the first aspect to the second aspect. Details are not described herein again.

### BRIEF DESCRIPTION OF DRAWINGS

FIG. 1 is a schematic diagram of an architecture of charging and electric driving on an electric vehicle according to a conventional technology;
FIG. 2 is a schematic diagram of a structure of a motor according to an embodiment of this application;
FIG. 3 is a schematic diagram of a winding manner of a transformer coil and an armature winding according to an embodiment of this application;
FIG. 4 is a schematic diagram of a winding manner of a primary coil and a secondary coil according to an embodiment of this application;
FIG. 5 is a schematic diagram of another winding manner of a primary coil and a secondary coil according to an embodiment of this application;
FIG. 6 is a schematic diagram of a structure of a first charging apparatus according to an embodiment of this application;
FIG. 7 is a schematic diagram of a structure of a second charging apparatus according to an embodiment of this application;
FIG. 8 is a schematic diagram of a structure of a third charging apparatus according to an embodiment of this application;
FIG. 9 is a schematic diagram of a structure of a fourth charging apparatus according to an embodiment of this application;
FIG. 10 is a schematic diagram of a structure of a fifth charging apparatus according to an embodiment of this application;
FIG. 11 is a schematic diagram of a structure of a sixth charging apparatus according to an embodiment of this application;
FIG. 12 is a schematic diagram of a structure of a powertrain according to an embodiment of this application; and
FIG. 13 is a schematic diagram of a structure of a vehicle according to an embodiment of this application.

### DESCRIPTION OF EMBODIMENTS

The following first describes an application scenario in embodiments of this application.

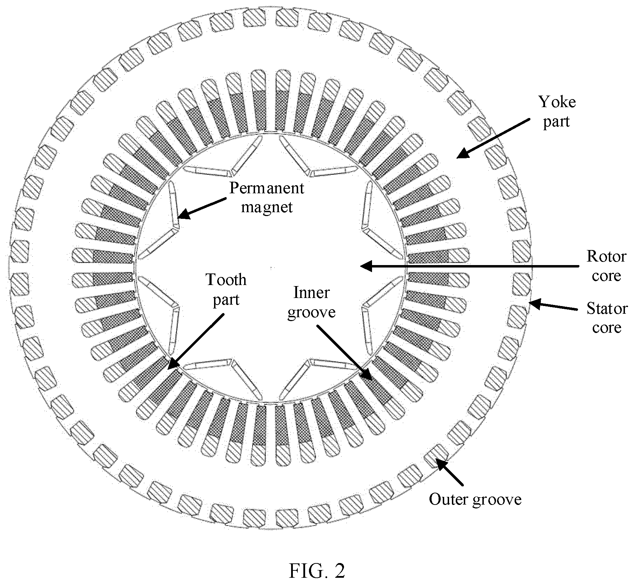

Embodiments of this application may be applied to a motor shown in FIG. 2. As shown in FIG. 2, the motor includes a rotor and a stator.

The rotor is located inside the stator, and the rotor is coaxial with the stator. The rotor includes a rotor core and a permanent magnet. The stator includes a stator core and an armature winding (not shown in FIG. 2). The armature winding may also be referred to as a stator winding. Specifically, the stator core is divided into a yoke part and a tooth part (which may also be referred to as a stator tooth), a protrusion on an inner side that is of the stator core and that faces a rotor direction is referred to as the tooth part, a groove structure (which may be referred to as an inner groove for short in embodiments of this application) is formed between tooth parts, and a part between a groove bottom and an outer surface of the stator core is referred to as the yoke part, that is, a part in the stator core other than the tooth part may be referred to as the yoke part. The tooth part of the stator core is used to wind the armature winding.

In addition, in embodiments of this application, a difference from a conventional technology lies in that a groove structure (which may be referred to as an outer groove for short in embodiments of this application) is further provided on the outside of the stator core. The outer groove extends along an axial direction of the rotor (that is, an axial direction of the stator core) and is used to wind a transformer coil, and the transformer coil includes a primary coil and a secondary coil.

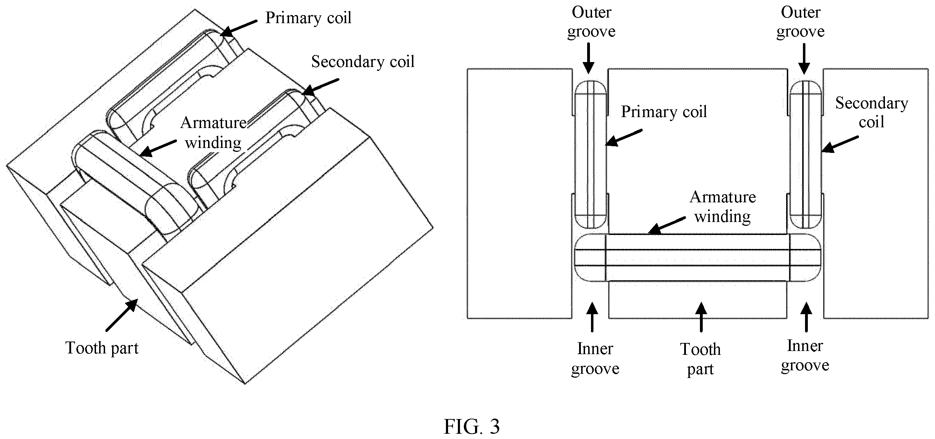

For example, in embodiments of this application, a winding manner of the transformer coil and the armature winding may be shown in FIG. 3. It can be seen from FIG. 3 that, the armature winding is wound around the tooth part of the stator core, the transformer coil is wound around the yoke part of the stator core, and the transformer coil is wound through inner and outer grooves of the stator core and fastens a position of the transformer coil through the inner and outer grooves. The motor shown in FIG. 2 is coupled to a motor control unit (motor control unit, MCU). When a vehicle is stationary, an external power supply is stepped up/stepped down through the transformer coil, alternating current-direct current conversion is performed on an alternating current output by the secondary coil through the MCU, and an obtained direct current is used to charge a power battery. When the vehicle is moving, the MCU converts a direct current output from the power battery into an alternating current, the alternating current is introduced into the armature winding to generate a rotating stator magnetic field, and the stator magnetic field and a rotor magnetic field generate an interaction force to drive the rotor to rotate. Therefore, mechanical energy is output.

It should be noted that in FIG. 2, only an example in which the stator core has 48 tooth parts is used for illustration. In actual application, a quantity of tooth parts may be another value. This is not specifically limited in embodiments of this application.

It should also be noted that a permanent magnet motor is used as an example in FIG. 2. In actual application, the motor may also be another type of motor, for example, an electric excitation motor, an asynchronous motor, or a hybrid excitation motor. A type and an excitation manner of the motor are not specifically limited in embodiments of this application provided that the yoke part of the stator core in the motor can be used to wind the primary coil and the secondary coil.

The following further describes in detail embodiments of this application with reference to accompanying drawings.

It should be noted that "a plurality of" in embodiments of this application means two or more than two. In addition, in the descriptions of this application, terms such as "first" and "second" are merely used for distinction and description, and shall not be understood as an indication or implication of relative importance or an indication or implication of an order.

An embodiment of this application provides a motor. As shown in FIG. 2, the motor includes a rotor and a stator, and the stator includes a stator core. In addition, the motor also includes a primary coil and a secondary coil.

The primary coil may also be referred to as a primary-side coil or a primary-side winding. The secondary coil may also be referred to as a secondary-side coil or a secondary-side winding. The primary coil and the secondary coil may be collectively referred to as transformer coils or transformer windings. The primary coil is wound around a yoke part of the stator core, and the primary coil is coupled to an external power supply. The secondary coil is wound around the yoke part of the stator core, the secondary coil and the primary coil are wound around different groove structures inside the stator core, and the secondary coil is coupled to a power battery via a motor control unit.

The secondary coil and the primary coil are wound around different groove structures inside the stator core. This may be understood as that it is assumed the groove structures inside the stator core are numbered from 1 to 12. In a possible example, when the primary coil is wound around the yoke part of the stator core, the primary coil is wound through groove structures numbered 1, 3, 5, 7, 9, and 11, and when the secondary coil is wound around the yoke part of the stator core, the secondary coil is wound through groove structures numbered 2, 4, 6, 8, 10, and 12. In another possible example, when the primary coil is wound around the yoke part of the stator core, the primary coil is wound through groove structures numbered 1, 3, 6, 7, 8, and 11, and when the secondary coil is wound around the yoke part of the stator core, the secondary coil is wound through groove structures numbered 2, 4, 5, 9, 10, and 12. That is, a number of a groove structure through which the primary coil is wound when the primary coil is wound around the yoke part of the stator core does not overlap with a number of a groove structure through which the secondary coil is wound when the secondary coil is wound around the yoke part of the stator core.

The primary coil and the secondary coil are wound around the yoke part of the stator core, so that the primary coil and the secondary coil can implement coupling voltage transformation through the stator core, to step up or step down an output voltage of the external power supply. Alternating current-direct current conversion is performed on an alternating current output by the secondary coil through an MCU coupled to the motor, and an obtained direct current may be used to charge a power battery.

For a transformer formed by the primary coil and the secondary coil, a transformation ratio of the transformer may be determined by a voltage range of the power battery and implemented by adjusting a quantity of turns of the primary coil and the secondary coil. For example, if a voltage of the power battery is higher than the mains 220 V, a transformation ratio of the transformer winding may be designed as a specific voltage step-up ratio; and if a voltage of the power battery is lower than the mains 220 V, the transformation ratio of the transformer winding may be designed as a specific voltage step-down ratio.

In addition, as shown in FIG. 2, a plurality of groove structures are provided on the outside of the stator core, and the plurality of groove structures on the outside of the stator core extend along an axial direction of the rotor and are used to wind the primary coil and the secondary coil. The plurality of groove structures on the outside of the stator core one-to-one correspond to groove structures on the inside of the stator core.

Specifically, in this embodiment of this application, the primary coil and the secondary coil may be wound in a plurality of manners. The following lists two manners.

### Manner 1

The primary coil is wound through odd-numbered grooves inside the stator core, and the secondary coil is wound through even-numbered grooves inside the stator core. Alternatively, the primary coil is wound through even-numbered grooves inside the stator core, and the secondary coil is wound through odd-numbered grooves inside the stator core.

That is, in a plurality of groove structures inside the stator core, the primary coil and the secondary coil are alternately wound through different groove structures. For example, it is assumed that the groove structures inside the stator core are numbered 1, 2, 3, ..., and N, where N is an even number. In a possible example, when the primary coil is wound around the yoke part of the stator core, the primary coil is wound through groove structures numbered 1, 3, 5, ..., and N-1; and when the secondary coil is wound around the yoke part of the stator core, the secondary coil is wound through groove structures numbered 2, 4, 6, ..., and N. In another possible example, when the primary coil is wound around the yoke part of the stator core, the primary coil is wound through groove structures numbered 2, 4, 6, ..., and N; and when the secondary coil is wound around the yoke part of the stator core, the secondary coil is wound through groove structures numbered 1, 3, 5, ..., and N-1.

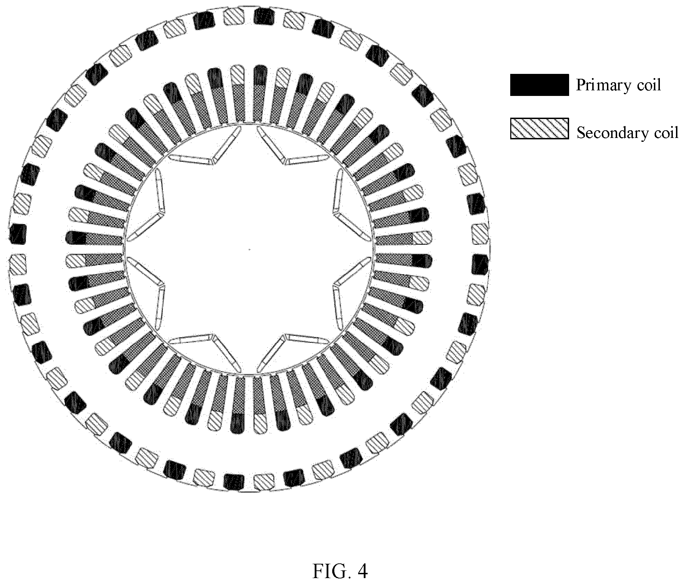

In Manner 1, a winding manner of the primary coil and the secondary coil in the motor shown in FIG. 2 may be shown in FIG. 4.

It can be learned from FIG. 4 that, in Manner 1, coils wound around two adjacent outer grooves (or inner grooves) are different. To be specific, one of two adjacent outer grooves (or inner grooves) is used to wind the primary coil, and the other is used to wind the secondary coil.

In Manner 1, the primary coil and the secondary coil are evenly distributed on a 360° circumference of the stator core, and the primary coil and the secondary coil are coupled through the yoke part of the stator core. Therefore, coupling effect is strong. When the motor drives a vehicle to run, a magnetic field of the yoke part of the stator core and a magnetic field generated by a transformer winding may counteract each other. This prevents the transformer winding from inducing a voltage when the motor is running.

### Manner 2

The primary coil is wound on a first part of the groove structure inside the stator core, the secondary coil is wound on a second part of the groove structure inside the stator core, and the primary coil and the secondary coil do not overlap in space.

To be specific, in the plurality of groove structures inside the stator core, the primary coil is evenly distributed on a half circumference of the stator core, and the secondary coil is evenly distributed on the other half circumference of the stator core. For example, the groove structures inside the stator core are numbered 1, 2, 3, ..., and N, where N is an even number. When the primary coil is wound around the yoke part of the stator core, the primary coil is wound through groove structures numbered 1, 2, 3, ..., and N/2, and when the secondary coil is wound around the yoke part of the stator core, the secondary coil is wound through groove structures numbered N/2+1, ..., and N. A motor with a 48-groove stator core is used as an example. The primary coil may be wound around grooves 1 to 24 on the left side (or grooves 25 to 48 on the right side) of the stator core, that is, the primary coil is wound around the first part of the groove structure. The secondary coil may be wound around grooves 25 to 48 on the right side (or grooves 1 to 24 on the left side) of the stator core, that is, the secondary coil is wound around the second part of the groove structure.

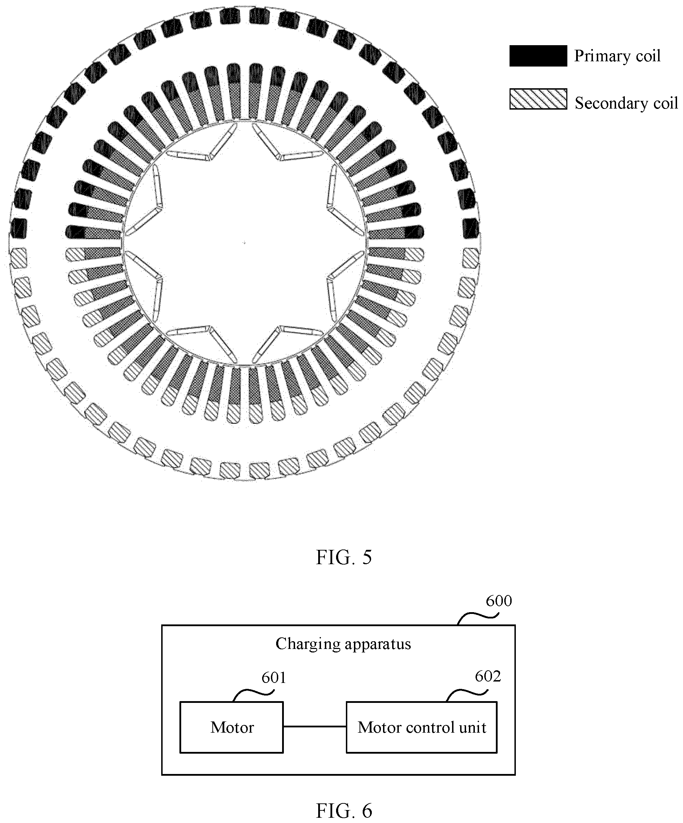

In Manner 2, a winding manner of the primary coil and the secondary coil in the motor shown in FIG. 2 may be shown in FIG. 5.

In Manner 2, the primary coil and the secondary coil are also coupled through the yoke part of the stator core. In addition, compared with Manner 1, the primary coil and the secondary coil do not overlap in space. This reduces winding difficulty of the transformer winding.

According to the motor shown in FIG. 2, the primary coil and the secondary coil are wound around the yoke part of the stator core to form a transformer, to step up/step down a voltage of an alternating current output by the external power supply, and then the alternating current output by the transformer is converted into a direct current through the MCU, to charge the power battery. A transformer structure is integrated in the motor. This shows an advantage of integration. In addition, the transformer structure may share a cooling and heat dissipation system with the motor. This further saves vehicle space. Therefore, compared with a solution in which a power battery is charged by using an independent transformer, the solution in which the transformer is integrated in the motor provided in this embodiment of this application may improve current density, reduce a transformer volume, and save vehicle space.

In addition, the motor may drive a vehicle: Through control of the MCU coupled with the motor, a stator magnetic field generated by the armature winding and a rotor magnetic field generate an interaction force to drive the rotor to rotate. Therefore, motor torque is output to drive the vehicle. An embodiment of this application further provides a charging apparatus 600. Refer to FIG. 6. The charging apparatus 600 includes a motor 601 and a motor control unit 602.

Specifically, the motor includes a rotor, a stator, a primary coil, and a secondary coil. The stator includes a stator core. The primary coil is wound around a yoke part of the stator core, and the primary coil is coupled to an external power supply. The secondary coil is wound around the yoke part of the stator core, and the secondary coil and the primary coil are wound around different groove structures inside the stator core. The primary coil and the secondary coil implement coupling voltage transformation through the stator core, to step up or step down an output voltage of the external power supply. The motor control unit is coupled to the secondary coil and a power battery, and is configured to perform alternating current-direct current conversion on an output current of the secondary coil to obtain a direct current, where the direct current is used to charge the power battery.

The motor 601 may be implemented by using the motor shown in FIG. 2. The motor 601 may be a permanent magnet motor, an electric excitation motor, an asynchronous motor, a hybrid excitation motor, or the like. Compared with the permanent magnet motor, a rotor magnetic field of the electric excitation motor, the asynchronous motor and the hybrid excitation motor may be adjusted, the rotor magnetic field may be reduced to zero when the transformer is operating. In addition, a magnetic field of the yoke part of the stator core is no longer a synchronous rotor magnetic field superimposed by a magnetic field of the transformer winding, but only the magnetic field of the transformer winding, and the magnetic field is less saturated. Therefore, the transformer may be designed to be more integrated, and the transformer volume is reduced.

A plurality of groove structures are provided on the outside of the stator core in the motor 601, and the plurality of groove structures on the outside of the stator core extend along an axial direction of the rotor and are used to wind the primary coil and the secondary coil. The plurality of groove structures on the outside of the stator core one-to-one correspond to groove structures on the inside of the stator core.

For a winding manner of the primary coil and the secondary coil in the motor 601, refer to related descriptions in FIG. 2.

For example, a winding manner may be as follows: The primary coil is wound through odd-numbered grooves (or even-numbered grooves) inside the stator core, and the secondary coil is wound through even-numbered grooves (or odd-numbered grooves) inside the stator core.

For another example, another winding manner may be as follows: The primary coil is wound on a first part of the groove structure inside the stator core, the secondary coil is wound on a second part of the groove structure inside the stator core, and the primary coil and the secondary coil do not overlap in space.

For a specific structure and function of the motor 601, refer to the related description of the motor shown in FIG. 2. Details are not described herein again.

An armature winding is wound around a tooth part of the stator core in the motor 601. Under control of the motor control unit 602, a stator magnetic field generated by the armature winding and a rotor magnetic field generate an interaction force to drive the rotor to rotate. Therefore, mechanical energy is output to drive a vehicle. The primary coil and the secondary coil are wound around the yoke part of the stator core, so that the primary coil and the secondary coil can implement coupling voltage transformation through the stator core, to step up or step down an output voltage of the external power supply. Alternating current-direct current conversion is performed on an alternating current output by the secondary coil through the motor control unit 602, and an obtained direct current is used to charge the power battery.

The following describes a specific structure of the motor control unit 602 in the charging apparatus 600.

Specifically, the motor control unit 602 may be a three-phase motor control unit, or may be a six-phase motor control unit. The following separately describes the two cases.
1. The motor control unit is the six-phase motor control unit.

If the motor control unit 602 is the six-phase motor control unit, the motor control unit 602 includes a three-phase upper bridge arm and a three-phase lower bridge arm. In this case, one end of the primary coil may be coupled to a connection point of two switching transistors connected in series in a first phase bridge arm of the three-phase upper bridge arm, and the other end of the secondary coil may be coupled to a connection point of two switching transistors connected in series in a second phase bridge arm of the three-phase upper bridge arm.

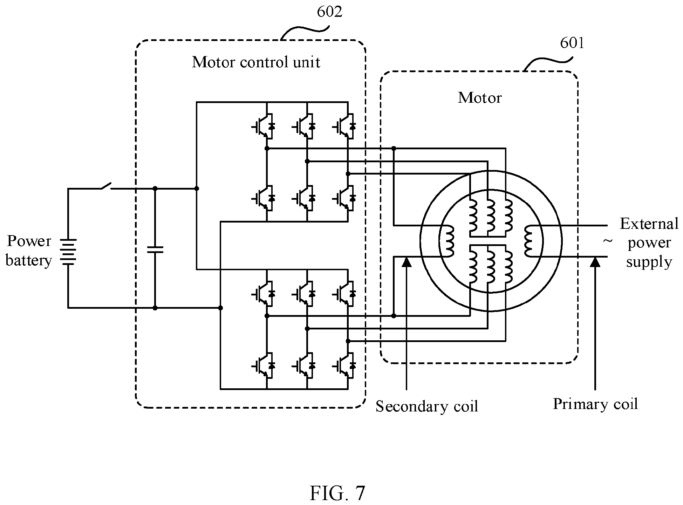

Specifically, a possible schematic diagram of a structure of the charging apparatus 600 may be shown in FIG. 7. The primary coil is connected to the external power supply through a conducting wire (for example, the primary coil is connected to the mains through a home electric charging plug), and the secondary coil is connected to a U1 phase of upper three bridge arms and a U2 phase of lower three bridge arms of the six-phase motor control unit.

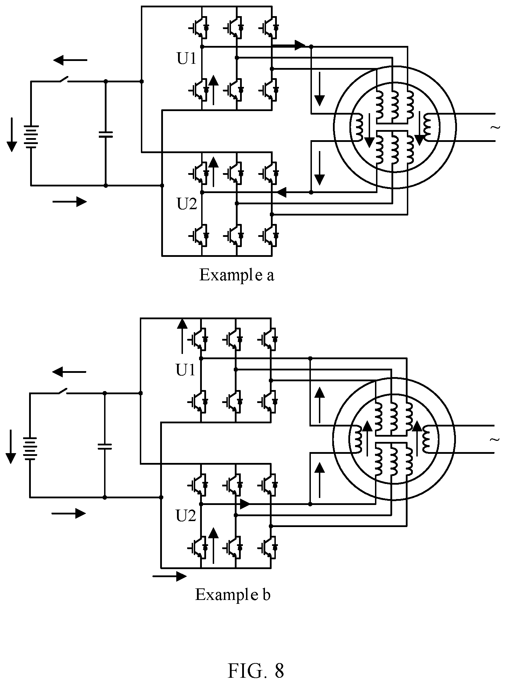

As shown in example a in FIG. 8, when an alternating current input from the external power supply is in a first half of a current cycle, a direction of a current in the primary coil is downward. Then, the current is transferred to the secondary coil through voltage step-up/step-down of a transformer, and the direction of the current is downward. After that, the current flows through a diode of an upper half bridge arm of the U2 phase to a positive electrode of the power battery. After the current flows out of a negative electrode of the power battery, the current flows through a diode of a lower half bridge arm of the U1 phase and then returns to the secondary coil.

As shown in example b in FIG. 8, when an alternating current input from the external power supply is in a second half of a current cycle, a direction of a current in the primary coil is upward. Then, the current is transferred to the secondary coil through voltage step-up/step-down of a transformer, and the direction of the current is upward. After that, the current flows through a diode of an upper half bridge arm of the U1 phase to a positive electrode of the power battery. After the current flows out of a negative electrode of the power battery, the current flows through a diode of a lower half bridge arm of the U2 phase and then returns to the secondary coil.

It should be noted that the first phase bridge arm and the second phase bridge arm that are respectively connected to the primary coil and the primary coil are not limited to those shown in FIG. 8, provided that the first phase bridge arm and the second phase bridge arm can provide a loop for the secondary coil to communicate with the power battery.

In addition, in this embodiment of this application, a switching transistor disposed in a bridge arm of the motor control unit 602 includes but is not limited to a metal-oxide semiconductor field-effect transistor (metal-oxide-semiconductor field-effect transistor, MOSFET), a gallium nitride (gallium nitride, GaN) transistor, an insulated gate bipolar transistor (insulated gate bipolar transistor, IGBT), and a bipolar junction transistor (bipolar junction transistor, BJT). If the switching transistor disposed in the bridge arm of the motor control unit 602 is the IGBT, the switching transistor may be specifically a wide bandgap semiconductor IGBT such as a silicon IGBT (Si IGBT) or a silicon carbide (SiC) IGBT.

According to the foregoing solution, two bridge arms of the six-phase motor control unit are reused, to provide a loop connected to the power battery for the secondary coil. Therefore, rectification after voltage step-up/step-down can be implemented, and a direct current obtained after rectification may be used to charge the power battery.

2. The motor control unit is the three-phase motor control unit.

If the motor control unit is the three-phase motor control unit, the three-phase motor control unit includes a three-phase bridge arm. In addition, different from a conventional technology, in this embodiment of this application, the three-phase motor control unit further includes a low-power bridge arm. Specifically, one end of the primary coil is coupled to a connection point of two switching transistors connected in series in a first phase bridge arm of the three-phase bridge arm, and the other end of the secondary coil is coupled to a connection point of two switching devices connected in series in the low-power bridge arm.

The switching device in the low-power bridge arm is a device that can be turned on or turned off, for example, a switching transistor, a diode, or a capacitor. Because the three-phase motor control unit cannot provide a loop for the secondary coil to communicate with the power battery, it is necessary to add the low-power bridge arm, to provide the loop for the secondary coil to communicate with the power battery.

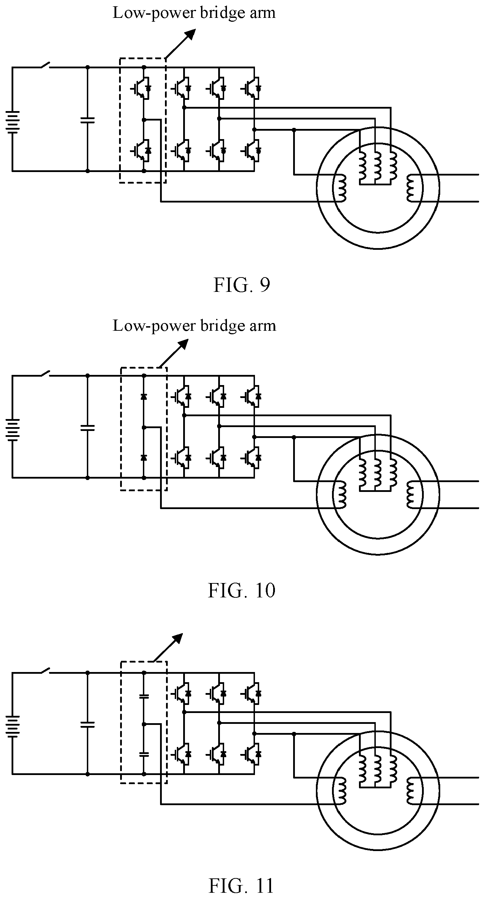

In a possible example, the low-power bridge arm includes a first switching transistor and a second switching transistor that are connected in series. A possible schematic diagram of a structure of the charging apparatus 600 may be shown in FIG. 9.

That is, one low-power IGBT bridge arm is added between positive and negative direct current high voltage electrodes in the motor control unit 602, one end of the secondary coil is connected to one of bridge arms of the three-phase IGBT, and the other end is connected to the newly added low-power IGBT bridge arm.

In another possible example, the low-power bridge arm includes a first diode and a second diode that are connected in series. A possible schematic diagram of a structure of the charging apparatus 600 may be shown in FIG. 10.

That is, two diodes are added between positive and negative direct current high voltage electrodes in the motor control unit 602, one end of the secondary coil is connected to one bridge arm of the three-phase IGBT, and the other end is connected to the middle of the two diodes.

In still another possible example, the low-power bridge arm includes a first capacitor and a second capacitor that are connected in series. A possible schematic diagram of a structure of the charging apparatus 600 may be shown in FIG. 11.

That is, two capacitors are added between positive and negative direct current high voltage electrodes in the motor control unit 602, one end of the secondary coil is connected to one bridge arm of the three-phase IGBT, and the other end is connected to the middle of the two capacitors.

For the examples in FIG. 9, FIG. 10, and FIG. 11, a process of charging the power battery is similar to that in FIG. 8. Details are not described herein again.

According to the foregoing solution, one bridge arm of the three-phase motor control unit and the newly added low-power bridge arm are reused, to provide a loop connected to the power battery for the secondary coil. Therefore, rectification after voltage step-up/step-down can be implemented, and a direct current obtained after rectification may be used to charge the power battery.

According to the charging apparatus 600 shown in FIG. 6, a primary coil and a secondary coil are wound around the yoke part of the stator core to form a transformer, to step up or step down an output voltage of an external power supply, and then the alternating current output by the secondary coil is converted into a direct current through the motor control unit 602, to charge the power battery. A transformer structure is integrated in the motor 601. This shows an advantage of integration. Compared with a solution in which a power battery is charged by using an independent transformer, the solution provided in this embodiment of this application may reduce a transformer volume and save vehicle space.

In addition, the charging apparatus 600 may further implement driving of a vehicle: Under control of the motor control unit 602, a stator magnetic field and a rotor magnetic field generate an interaction force to drive the rotor to rotate. Therefore, mechanical energy is output to drive the vehicle.

The charging apparatus 600 implements a transformer function through integrating the primary coil and the secondary coil in the yoke part of the motor 601, and charges the power battery through reusing a rectification function of the motor control unit 602. In another design, an independent ring transformer may be disposed in the motor 601 to implement the transformer function; and the power battery is charged through reusing the rectification function of the motor control unit 602. The ring transformer is disposed in a housing of the motor 601, the ring transformer is coaxially axially distributed with the motor 601, and the ring transformer simultaneously shares a cooling and heat dissipation system of the motor 601. In this way, a system integration rate is improved, and vehicle space is saved.

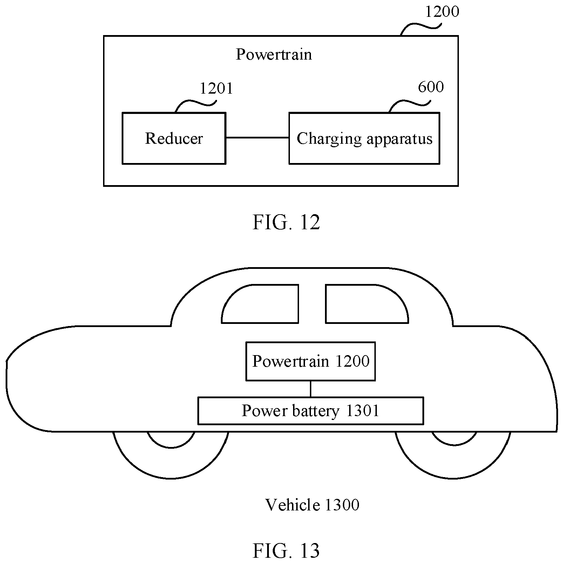

In addition, an embodiment of this application further provides a powertrain. As shown in FIG. 12, a powertrain 1200 includes a reducer 1201 and the foregoing charging apparatus 600.

Further, an embodiment of this application further provides a vehicle. As shown in FIG. 13, a vehicle 1300 includes a power battery 1301 and a powertrain 1200.

It should be noted that, in the vehicle 1300, arrangement positions of the power battery 1301 and the powertrain 1200 are merely examples. In actual application, the arrangement positions of the power battery 1301 and the powertrain 1200 are not limited to the manner shown in FIG. 13. In addition, for implementations and technical effects that are not described in detail in the powertrain 1200 and the vehicle 1300, refer to the foregoing description. Details are not described herein again.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

## Claims

1. A motor, comprising a rotor and a stator, wherein the stator comprises a stator core; and the motor further comprises:
a primary coil, wherein the primary coil is wound around a yoke part of the stator core, and the primary coil is coupled to an external power supply; and
a secondary coil, wherein the secondary coil is wound around the yoke part of the stator core, the secondary coil and the primary coil are wound around different groove structures inside the stator core, and the secondary coil is coupled to a power battery via a motor control unit.

2. The motor according to claim 1, wherein the primary coil and the secondary coil implement coupling voltage transformation through the stator core, to step up or step down an output voltage of the external power supply.

3. The motor according to claim 1 or 2, wherein a plurality of groove structures are provided on the outside of the stator core, and the plurality of groove structures on the outside of the stator core extend along an axial direction of the rotor and are used to wind the primary coil and the secondary coil; and the plurality of groove structures on the outside of the stator core one-to-one correspond to groove structures on the inside of the stator core.

4. The motor according to any one of claims 1 to 3, wherein the motor control unit is configured to perform alternating current-direct current conversion on an output current of the primary coil to obtain a direct current, and the direct current is used to charge the power battery.

5. The motor according to any one of claims 1 to 4, wherein the primary coil is wound through odd-numbered grooves inside the stator core, and the secondary coil is wound through even-numbered grooves inside the stator core; or
the primary coil is wound through even-numbered grooves inside the stator core, and the secondary coil is wound through odd-numbered grooves inside the stator core.

6. The motor according to any one of claims 1 to 4, wherein the primary coil is wound on a first part of the groove structure inside the stator core, the secondary coil is wound on a second part of the groove structure inside the stator core, and the primary coil and the secondary coil do not overlap in space.

7. The motor according to any one of claims 1 to 6, wherein the stator further comprises:
an armature winding wound around a tooth part of the stator core.

8. The motor according to any one of claims 1 to 7, wherein the rotor comprises a rotor core and a permanent magnet.

9. A charging apparatus, comprising:
a motor, wherein the motor comprises a rotor, a stator, a primary coil, and a secondary coil, the stator comprises a stator core, the primary coil is wound around a yoke part of the stator core, the primary coil is coupled to an external power supply, the secondary coil is wound around the yoke part of the stator core, the secondary coil and the primary coil are wound around different groove structures inside the stator core, and the primary coil and the secondary coil implement coupling voltage transformation through the stator core, to step up or step down an output voltage of the external power supply; and
a motor control unit, coupled to the secondary coil and a power battery, and configured to perform alternating current-direct current conversion on an output current of the secondary coil to obtain a direct current, wherein the direct current is used to charge the power battery.

10. The charging apparatus according to claim 9, wherein a plurality of groove structures are provided on the outside of the stator core, and the plurality of groove structures on the outside of the stator core extend along an axial direction of the rotor and are used to wind the primary coil and the secondary coil; and the plurality of groove structures on the outside of the stator core one-to-one correspond to groove structures on the inside of the stator core.

11. The charging apparatus according to claim 9 or 10, wherein the primary coil is wound through odd-numbered grooves inside the stator core, and the secondary coil is wound through even-numbered grooves inside the stator core; or
the primary coil is wound through even-numbered grooves inside the stator core, and the secondary coil is wound through odd-numbered grooves inside the stator core.

12. The charging apparatus according to claim 9 or 10, wherein the primary coil is wound on a first part of the groove structure inside the stator core, the secondary coil is wound on a second part of the groove structure inside the stator core, and the primary coil and the secondary coil do not overlap in space.

13. The charging apparatus according to any one of claims 9 to 12, wherein the motor control unit is a six-phase motor control unit, and the six-phase motor control unit comprises a three-phase upper bridge arm and a three-phase lower bridge arm.

14. The charging apparatus according to claim 13, wherein one end of the primary coil is coupled to a connection point of two switching transistors connected in series in a first phase bridge arm of the three-phase upper bridge arm, and the other end of the secondary coil is coupled to a connection point of two switching transistors connected in series in a second phase bridge arm of the three-phase upper bridge arm.

15. The charging apparatus according to any one of claims 9 to 12, wherein the motor control unit is a three-phase motor control unit, and the three-phase motor control unit comprises a three-phase bridge arm and a low-power bridge arm.

16. The charging apparatus according to claim 15, wherein one end of the primary coil is coupled to a connection point of two switching transistors connected in series in a first phase bridge arm of the three-phase bridge arm, and the other end of the secondary coil is coupled to a connection point of two switching devices connected in series in the low-power bridge arm.

17. The charging apparatus according to claim 15 or 16, wherein the low-power bridge arm comprises a first switching transistor and a second switching transistor that are connected in series;
the low-power bridge arm comprises a first diode and a second diode that are connected in series; or
the low-power bridge arm comprises a first capacitor and a second capacitor that are connected in series.

18. The charging apparatus according to any one of claims 9 to 17, wherein the motor is one of a permanent magnet motor, an electric excitation motor, an asynchronous motor, and a hybrid excitation motor.

19. A powertrain, comprising a reducer and the charging apparatus according to any one of claims 9 to 18.

20. A vehicle, comprising a power battery and the powertrain according to claim 19.
